# FASCICULE DE BREVET EUROPEEN

(11) **EP 1 826 594 B1**
(45) Date de publication et mention de la délivrance du brevet: **05.04.2017**
(21) Numéro de dépôt: 07290193.7
(22) Date de dépôt: 15.02.2007
(51) Int. Cl.: G02B 5/30, G02B 1/08, B29C 63/16, G02C 7/12

(54) **Procédé de réalisation d'un élément optique polarisant**
Herstellungsverfahren einer polarisierenden optischen Vorrichtung
Process of manufacturing of a polarizing optical element

(30) Priorité: 23.02.2006 FR 0601611
(43) Date de publication de la demande: 29.08.2007
(73) Titulaire: ESSILOR INTERNATIONAL (Compagnie Générale d'Optique), 94220 Charenton-le-Pont (FR)
(72) Inventeur: Lesartre, Noémie c/o Essilor International, 94220 Charenton Le Pont (FR); Rychel, Dominique c/o Essilor International, 94220 Charenton Le Pont (FR)
(74) Mandataire: Cabinet Plasseraud

(56) Documents cités:
- EP-A- 1 426 168
- EP-A- 1 593 990
- WO-A-97/35216
- US-A1- 2004 125 335
- PATENT ABSTRACTS OF JAPAN vol. 2002, no. 11, 6 novembre 2002 (2002-11-06) -& JP 2002 196141 A (SUMITOMO CHEM CO LTD), 10 juillet 2002 (2002-07-10)

## Description

La présente invention concerne un procédé de réalisation d'un élément optique polarisant, ainsi qu'un élément optique obtenu par ce procédé.

Il est connu de conférer une fonction polarisante à un élément optique en réalisant successivement, sur une surface de cet élément, une première couche d'orientation et une seconde couche polarisante à composés dichroïques. Les composés dichroïques de la seconde couche ont une orientation angulaire qui est déterminée par la première couche. Une telle méthode permet d'obtenir un élément optique qui possède un contraste élevé de transmission d'une lumière polarisée. De façon connue, un tel contraste est défini comme le quotient des coefficients de transmission d'une lumière polarisée parallèlement à la direction des composés dichroïques et perpendiculairement à cette direction. En outre, l'élément optique polarisant qui est obtenu de cette façon présente une qualité et un aspect optique satisfaisants, compatibles avec de nombreuses utilisations, notamment une utilisation ophtalmique.

Le document EP 1 426 168 divulgue un procédé de réalisation d'un élément optique polarisant selon le préambule de la revendication 1.

Le document US 2005/151926 divulgue des méthodes pour réaliser des éléments ophtalmiques polarisants en formant des revêtements polarisants sur une surface extérieure de ces éléments ou de substrats.

Le document EP 1 203 967 divulgue un film polariseur qui comporte un
film de transfert et une couche à base de polymères à cristaux liquides et de colorant dichroïque.

Un but de la présente invention consiste à proposer un procédé alternatif de réalisation d'un élément optique polarisant, permettant une dissociation dans la chaîne de production de la réalisation de l'élément optique et de la réalisation de sa fonctionnalisation polarisante. Un tel procédé est particulièrement avantageux pour la réalisation d'un élément optique telle qu'une lentille ophtalmique au sein d'un laboratoire de prescription. Pour cela, l'invention propose un procédé de réalisation d'un élément optique polarisant par application d'une structure en couches sur une surface d'un élément optique de base. La structure comprend une première couche d'orientation constitué d'un réseau de polymères photo-orientés et une seconde couche polarisante comprenant des monomères de cristaux liquides et au moins un colorant dichroïque, ceux-ci ayant une orientation angulaire déterminée par la première couche. Le procédé comprend les étapes suivantes :
/a/ réaliser la structure en couches sur un support ;
/b/ placer l'élément optique de base et la structure en couches portée par le support entre un premier dispositif de pressage à surface d'appui et un second dispositif de pressage à membrane gonflable, la structure en couches étant tournée vers l'élément optique de base et une portion d'un matériau adhésif étant disposée entre la structure et l'élément de base ;
/c/ presser la structure en couches contre la surface de l'élément optique de base en gonflant la membrane et en maintenant un écart fixe entre les premier et second dispositifs de pressage ; et
/d/ relâcher l'élément optique et retirer le support de façon à laisser la structure en couches collée sur la surface de l'élément optique de base.

Ainsi, la structure en couches, qui confère la fonction polarisante à l'élément optique, est d'abord réalisée sur un support, puis appliquée sur l'élément optique de base en exerçant une pression à travers le support. La structure en couches est ainsi collée sur l'élément optique de base, par l'intermédiaire de la portion de matériau adhésif, et le support peut être retiré, par exemple par pelage. Le support est utile pour la réalisation de la structure en couches à l'étape /a/, et pour introduire la structure en couches entre les dispositifs de pressage à l'étape /b/.

Un premier avantage d'un procédé selon l'invention réside dans la possibilité de réaliser un élément optique polarisant qui a une faible épaisseur. En effet, contrairement à des procédés de casting couramment utilisé dans le domaine de l'ophtalmie pour la réalisation de lentille thermodure polarisante, il n'est pas nécessaire de mettre en sandwich un film polarisant entre deux couches de polymère constitutif de la lentille. De plus un tel procédé ne nécessite pas d'étape de chauffage permettant ainsi de préserver:
- d'une part les propriétés dioptriques de l'élément optique;
- et d'autre part les propriétés colorimétriques et polarisante de la structure en couche apportant la fonctionnalisation polarisante.

Un second avantage d'un procédé selon l'invention réside dans le fait que la structure en couches peut être appliquée sur l'élément optique de base en aval d'un réseau de distribution de l'élément optique, ou tout au moins en dehors d'usines centralisées. En effet, la structure en couches portée par le support peut être approvisionnée indépendamment de l'élément optique de base, et peut être appliquée sur ce dernier dans un centre d'accueil de clientèle, ou dans un laboratoire intermédiaire entre un tel centre et une usine. En effet, les étapes /b/ à /d/ sont relativement rapides, et ne nécessitent pas d'appareillages très onéreux. L'élément optique polarisant peut alors être réalisé à la demande, sans provoquer de longs délais de réalisation. Un tel avantage peut être particulièrement important lorsque l'élément optique est un verre ophtalmique, compte tenu de la structure des usines de fabrication de tels verres et de celle du réseau de distribution.

Un troisième avantage de l'invention résulte de l'utilisation d'une portion d'un matériau adhésif qui est disposée entre la structure en couches et l'élément optique de base. Un procédé selon l'invention peut alors être utilisé pour des éléments optiques de base qui ont des compositions chimiques différentes, au niveau de la surface sur laquelle la structure en couches est appliquée. La portion de matériau adhésif peut être initialement disposée sur la surface de l'élément optique de base, mais de préférence, elle est disposée sur la structure en couches, sous forme d'une couche située d'un côté des première et seconde couches opposé au support. Lorsqu'elle est disposée initialement sur la structure en couches, la structure munie de la couche de matériau adhésif contient tous les composants nécessaires pour apporter une fonction polarisante à un élément optique quelconque. Il suffit donc de se procurer la structure en couches pour réaliser un élément optique polarisant à partir d'un élément optique de base simple.

A l'étape /b/, l'élément optique de base peut être placé du côté du premier dispositif de pressage. La structure en couches est alors placée du côté du second dispositif de pressage. Une telle disposition est avantageuse lorsque la membrane du second dispositif est susceptible de mieux se déformer en suivant la forme de la surface du composant optique de base sur laquelle est transférée la structure en couches, par rapport à la surface d'appui du premier dispositif.

Eventuellement, le premier dispositif de pressage à surface d'appui peut comprendre une autre membrane gonflable formant la surface d'appui. L'étape /c/ est alors exécutée en gonflant les membranes des premier et second dispositifs de pressage.

De préférence, la seconde couche polarisante de la structure en couches est sous-polymérisée pendant les étapes /b/ et /c/. On entend par sous-polymérisation de cette seconde couche une polymérisation partielle de celle-ci, de sorte qu'elle contient encore des fonctions polymérisantes qui n'ont pas réagi à l'issue de la polymérisation partielle. Un tel état de sous-polymérisation de la seconde couche polarisante pendant les étapes /b/ et /c/ présente les avantages suivants :
- cette seconde couche polarisante, et par conséquent l'ensemble de la structure en couches, est alors plus souple et plus plastique pendant l'étape /c/. La structure en couches peut alors se déformer plus facile pendant cette étape, notamment pour acquérir une courbure identique à celle de la surface de l'élément optique de base, sans produire d'étirements localisés ni se déchirer, ni former de plis ;
- des structures en couches sous-polymérisées identiques peuvent être appliquées sur des éléments optiques de base dont les surfaces présentent des courbures différentes, plus ou moins importantes. Un degré de polymérisation de la seconde couche polarisante qui est suffisamment faible rend la structure en couches compatible avec des courbures différentes de l'élément optique de base. Une même structure en couches, produite en grande quantité, peut donc être utilisée avec des éléments optiques de base variables, tout en mettant en oeuvre le procédé de l'invention en aval du réseau de distribution des éléments optiques ; et
- certaines des fonctions polymérisantes de la seconde couche polarisante qui n'ont pas encore réagi peuvent participer au maintien de la structure en couches sur la surface de l'élément optique de base. La cohésion de l'élément optique final peut ainsi être renforcée.

Lorsque la seconde couche polarisante est sous-polymérisée pendant l'étape /c/, le procédé peut comprendre en outre une étape de polymérisation complémentaire de la seconde couche polarisante, qui est effectuée après l'étape /c/. Cette étape de polymérisation complémentaire confère à la seconde couche polarisante ses propriétés finales, notamment sa dureté.

Selon un mode de mise en oeuvre préféré de l'invention, elle peut être réalisée en exécutant les étapes suivantes :
/a1/ former une première couche sur le support temporaire de polymères photo-orientables, présentant des groupes photo-réactifs;
/a2/ polymériser la première couche sous un rayonnement ultraviolet polarisé linéairement, de façon à réaliser un réseau de polymère photo-orienté selon une direction imposée par la direction de polarisation dudit rayonnement UV incident,
/a3/ former, sur la première couche, une seconde couche comprenant un mélange d'au moins un colorant dichroïque et d'au moins un cristal liquide monomérique réticulable, ceux-ci étant orientés angulairement par la première couche ; et
/a4/ polymériser au moins en partie les cristaux liquides monomériques de la seconde couche, de façon à fixer les colorants dichroïques dans l'orientation angulaire déterminée par la première couche.

La polarisation linéaire du rayonnement UV est réalisée au moyen d'un polariseur intercalé entre la source UV et la première couche.

La réaction sous lumière polarisée (étape /a2/) des groupes photo-réactifs portés par le polymère photo-orientable conduit à la formation d'un réseau de polymère anisotrope orienté selon la direction du polariseur. La seconde couche du système polarisant comprenant les cristaux liquides monomériques et les colorants dichroïques adoptent, lors de l'étape /a3/, une orientation perpendiculaire à cette direction du polariseur imprimée au polymère photo-orientable. Cette orientation des colorants dichroïques confère ainsi les propriétés de polarisation de la lumière visible au système. La polymérisation des cristaux liquides monomériques, à l'étape /a4/ et éventuellement lors d'une étape de polymérisation complémentaire qui est effectuée après l'étape /c/, stabilise ensuite définitivement la configuration de la seconde couche.

Un tel procédé permet d'obtenir la structure en couches avec une qualité optique satisfaisante, qui est compatible avec de nombreuses utilisations, notamment des utilisations ophtalmiques. En effet, étant donné que l'orientation des composés dichroïques est déterminée par la direction de polarisation de la lumière qui est utilisée pour polymériser la première couche, aucun étirement des couches n'est nécessaire. Tous les défauts optiques que provoquent usuellement un tel étirement sont donc supprimés.

Parmi les polymères réactifs photo-orientables utilisables dans le cadre de l'invention on peut citer à titre indicatif, ceux étant formés à partir de polymère acrylique, méthacrylique, de polyimides, et de dendrimères. Les polymères réactifs photo-orientables présentant des groupes photo-réactifs tels que acide cinnamique et ses dérivés, chalcones, coumarines, ou des ponts méthacrylates sont particulièrement envisageables.

Parmi les colorants dichroïques utilisables dans le cadre de l'invention on peut citer à titre indicatif, les azométhines, les indigoïdes, les thioindigoïdes, les indanes, les quinophtaloniques, les perylènes, les phtalopérines, les triphenodioxazines, les indoloquinoxalines, les imidazotriazines, les colorants azo et polyazo, les benzoquinones, les naphtoquinones, les anthraquinones et (poly)anthraquinones, les anthrapyrimidinones, les iodines et les iodates. Avantageusement les azos colorants et les anthraquinones sont utilisés dans le cadre de l'invention.

Parmi les matériaux adhésifs utilisables dans le cadre de l'invention, on peut citer à titre indicatif et non limitatif : les adhésifs époxydes, les adhésifs polyuréthanes réactifs; les colles thermodurcissables; les adhésifs à base de monomères polymérisables tels que les adhésifs cyanoacrylates; les adhésifs acryliques structuraux ou acryliques modifiés; les adhésifs "hot melts" ou thermofusibles; les plastisols PVC (polychlorure de vinyle); les adhésifs élastomères, colle contact au néoprène; les colles émulsions vinyliques et copolymères; les adhésifs sensibles à la pression (PSA); les colles à l'eau.

La structure en couches peut encore comprendre au moins une autre couche fonctionnelle, destinée à conférer une fonction supplémentaire à l'élément optique. Dans ce cas, la fonction supplémentaire est apportée à l'élément optique en même temps que la fonction de polarisation, lors des étapes /b/ à /d/.

D'autres particularités et avantages de la présente invention apparaîtront dans la description ci-après d'exemples de réalisation non limitatifs, en référence aux dessins annexés, dans lesquels :
- les figures 1a et 1b sont des vues en coupe respectives d'une structure en couches et d'un élément optique utilisés pour mettre en oeuvre un procédé selon l'invention ;
- les figures 2a-2c et 3a sont des vues en perspective et en coupe de dispositifs de pressage pouvant être utilisés pour mettre en oeuvre un procédé selon l'invention ; et
- les figures 3b-3f illustrent différentes étapes d'un procédé selon l'invention.

Pour raison de clarté des figures, les dimensions des éléments représentés ne sont pas en proportion avec des dimensions ou des rapports de dimensions réels. En outre, des références identiques dans des figures distinctes désignent des éléments identiques, ou qui ont des fonctions identiques.

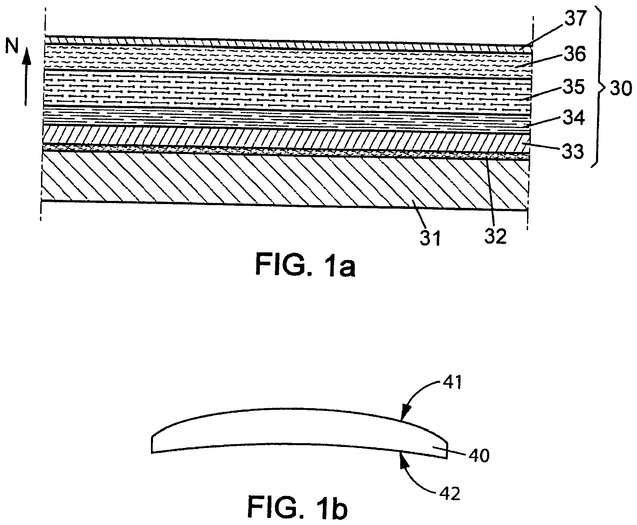

Conformément à la figure 1a, une structure en couches 30 est portée par un support pelliculaire 31, qui peut être à base de polycarbonate et présenter une épaisseur comprise entre 0,2 et 5,0 mm (millimètre), préférentiellement entre 0,5 et 2,0 mm. Avantageusement, le support 31 est flexible et présente une énergie de surface assez faible, de sorte que la structure en couches 30 puisse être aisément séparée du support 31, par exemple par pelage. Eventuellement, une couche intermédiaire 32 est disposée entre le support 31 et la structure 30, pour faciliter une séparation entre ceux-ci. Une telle couche intermédiaire 32 est appelée couche de pelage et peut comprendre, en particulier, un composé tensioactif à base de silicone.

Dans le mode de mise en oeuvre de l'invention qui est décrit ici, la structure en couches 30 comprend cinq couches élémentaires, référencées 33 à 37. Néanmoins, il est entendu qu'elle peut comprendre en outre des couches supplémentaires, qui sont alors transférées sur l'élément optique de base au sein de la structure 30.

La couche 33, qui est formée en premier sur le support 31 ou par dessus la couche de pelage 32, est destinée à conférer une fonction spécifique à l'élément optique. Ce peut être, par exemple, une couche de protection contre un rayonnement UV, une couche barrière à l'oxygène, une couche anti-abrasion, une couche anti-choc, un revêtement antireflet, un revêtement anti-statique ou un revêtement antisalissure. Chacune de ces couches est supposée connue individuellement, de même qu'au moins une méthode de fabrication de celle-ci sur le support 31. La couche 33 fait alors partie de la structure 30 qui est destinée à être séparée du support 31. Éventuellement, la couche 33 peut être une combinaison de plusieurs des couches ou revêtements précédents. Une combinaison particulièrement préférée est constituée par l'empilement suivant, énuméré à partir du support 31 ou de la couche de pelage 32 : un revêtement hydrophobe ou oléophobe, un revêtement antireflet, une couche anti-abrasion puis une couche antichoc.

La couche 34, qui est située sur la couche 33 au sein de la structure 30, est formée d'un réseau de polymère anisotrope qui induit une orientation des composés de la couche 35. Des colorants dichroïques qui sont incorporés dans la couche 35 ont ainsi une orientation qui est déterminée par la couche 34. Il en résulte un effet polarisant macroscopique de la structure 30, pour un faisceau lumineux qui traverse celle-ci. De façon connue, l'effet polarisant de la structure 30 est d'autant plus important que la répartition des orientations angulaires des colorants dichroïques dans la couche 35 est resserrée autour de la direction déterminée par la couche 34.

La couche 34 comprend des polymères photo-orientables présentant des groupes photo-réactifs, qui, après réaction sous lumière polarisée linéairement, forment un réseau de polymère anisotrope orienté selon la direction du polariseur. Par exemple, la couche 34 est formée sur le support 31, déjà muni des couches 32 et 33, à partir de polymères portant des groupements photo-réactifs acide cinnamique. Ce polymère est dissous par exemple dans un solvant de méthyl-éthyl-cétone, de cyclohexanone ou dans un mélange de ces deux derniers solvants. L'énergie de surface du matériau sur lequel est formée la couche 34 est ajustée de façon à obtenir une couche 34 continue et d'épaisseur régulière. Le solvant est ensuite évaporé, par exemple au moyen d'un rayonnement infrarouge ou par passage dans une étuve, et la couche 34 est polymérisée sous l'effet d'un rayonnement de type UV-B. Pour provoquer une polymérisation de la couche 34 sous forme d'un réseau de polymères photo-orientés, le rayonnement UV-B qui est utilisé est polarisé linéairement par un polariseur. Ce rayonnement peut avoir une énergie comprise entre 5 et 300 mJ/cm², par exemple.

La couche 35 est ensuite formée sur la couche 34 à partir d'un mélange de cristaux liquides monomériques réticulables et de colorants dichroïques répartis dans un solvant. Eventuellement, les colorants dichroïques peuvent être sélectionnés pour conférer une coloration à la structure, et, ultérieurement, pour conférer à l'élément optique final une fonction de filtre solaire. Les cristaux liquides monomériques et les colorants dichroïques de la couche 35 sur la couche 34 peuvent être mélangés à un solvant tel que la cyclohexanone par exemple. La couche 35 est chauffée puis polymérisée partiellement ou complètement sous l'effet d'un rayonnement UV-A. Lors du chauffage, les cristaux liquides monomériques prennent une orientation qui est déterminée par l'orientation du réseau de polymères photo-orientés de la couche 34 et qui est perpendiculaire à celle-ci. La température de chauffage peut par exemple être de 87°C. Naturellement, les étapes de chauffage et de séchage peuvent être réalisées au sein d'une même étape du procédé global. La température de chauffage va fortement dépendre du type de cristaux liquides utilisé. Lors de cette étape, il ne faut pas dépasser la température de clarification des cristaux liquides. Au-delà de cette température les cristaux liquides ne sont plus orientés suivant une direction privilégiée.

L'épaisseur de la couche 34 peut être comprise entre 50 et 200 nm (nanomètre), et est préférentiellement égale à 140 nm environ. L'épaisseur de la couche 35 peut être comprise entre 3 et 100 µm (micromètres), préférentiellement entre 5 et 50 µm, et avantageusement entre 5 et 10µm. Dans ces conditions, l'énergie du rayonnement de polymérisation de la couche 35 est de préférence comprise entre 0,3 et 1,5 J (Joule), voire entre 0,35 et 0,8 J, pour obtenir une polymérisation totale de cette couche. Pour obtenir une polymérisation partielle de la couche 35, l'énergie du rayonnement utilisé peut être réduite à une fraction des valeurs précédentes.

Les couches 34 et 35 peuvent être formées sur le support 31 par spin-coating ou par spray-coating, lorsque les dimensions du support 31 sont compatibles avec un étalement régulier des liquides utilisés selon ces procédés.

La structure 30 peut encore comprendre une couche d'un matériau adhésif 36. Ce peut être une couche à base d'époxy, à base d'un latex, notamment à base de polyuréthane, ou en un matériau adhésif sensible à la pression, ou PSA pour «Pressure Sensitive Adhesive» en anglais. Elle possède de préférence une épaisseur constante, afin de ne pas modifier ultérieurement une puissance optique de l'élément optique.

Optionnellement, la couche de matériau adhésif 36 peut être recouverte d'une pellicule 37, ou «liner» en anglais, destinée à être retirée pour découvrir la surface adhésive de la couche 36 avant que la structure 30 soit pressée contre l'élément optique.

La couche 36 et la pellicule 37 peuvent aussi être formées par centrifugation, ou «spin-coating» en anglais, sur les couches 33-35 portées par le support 31. Leur formation est alors considérée comme connue par l'Homme du métier, et n'est pas reprise ici en détail. Un tel procédé de dépôt par centrifugation est particulièrement adapté pour la couche 36, car il produit une couche de matériau adhésif dont l'épaisseur est constante dans toute la structure 30. La couche 36 n'introduit alors aucune altération du comportement dioptrique de l'élément optique polarisant qui est finalement obtenu selon l'invention : le verre polarisant final, muni de la structure 30, possède une répartition de puissance optique qui est identique à celle du verre initial 40.

La couche 36 peut également être déposée directement sur la face 41 de la lentille 40.

Une direction N est en outre indiquée sur la figure 1a, pour repérer l'orientation de la structure 30. La direction N est perpendiculaire aux couches de la structure 30, en partant du support 31.

A titre d'illustration, l'invention est décrite dans le cadre de l'application de la structure à couches précédente sur un verre ophtalmique qui constitue l'élément optique de base. Il est entendu qu'elle peut être mise en oeuvre de façon similaire avec d'autres éléments optiques, tels que, notamment, un élément d'instrument de visée, un élément d'instrument de mesure, une visière de casque, etc.

Conformément à la figure 1b, un verre ophtalmique 40 présente une surface antérieure convexe 41 et une surface postérieure concave 42. Il peut être en matériau minéral ou organique, en particulier en un matériau organique à indice de réfraction élevé. Dans le cadre de l'invention, on entend par indice de réfraction élevé un indice supérieur ou égal à 1,60, pouvant être égal à 1,67, par exemple. L'utilisation d'un tel matériau à indice de réfraction élevé pour la réalisation d'un verre correcteur d'amétropie est particulièrement avantageuse, puisque le verre présente alors une épaisseur réduite et une courbure moindre, pour une puissance optique identique. Un poids inférieur du verre en résulte, qui procure un confort supérieur au porteur. En particulier, un tel verre ophtalmique peut avoir une épaisseur inférieure à 1,2 mm dans une zone centrale de celui-ci, voire sensiblement égale à 1,1 mm.

L'invention est maintenant décrite dans le cadre de l'application de la structure en couches 30 sur la face convexe 41 du verre 40. Mais il est entendu que le procédé peut être mis en oeuvre d'une façon similaire pour appliquer la structure 30 sur la face concave d'un élément optique de base, par exemple la face 42 du verre 40.

De préférence, le support 31 présente une forme sensiblement complémentaire à la surface 41 du verre 40, lorsque le support et le verre sont disposés pour être pressés l'un contre l'autre. Le pressage de la structure 30 contre le verre 40 crée alors moins de contraintes dans les couches de la structure, et le verre finalement obtenu présente moins de défauts visibles, tels que des étirements, des plis ou des déchirures de l'une au mois des couches 33-37. Le support 31 peut présenter une telle forme initialement, c'est-à-dire avant que la structure 30 soit réalisée. Alternativement, la structure 30 peut être réalisée sur le support 31 alors que celui est plan. Dans ce cas, un préformage du support 31 muni de la structure 30 peut être effectué, avant que la structure soit pressée contre le verre 40.

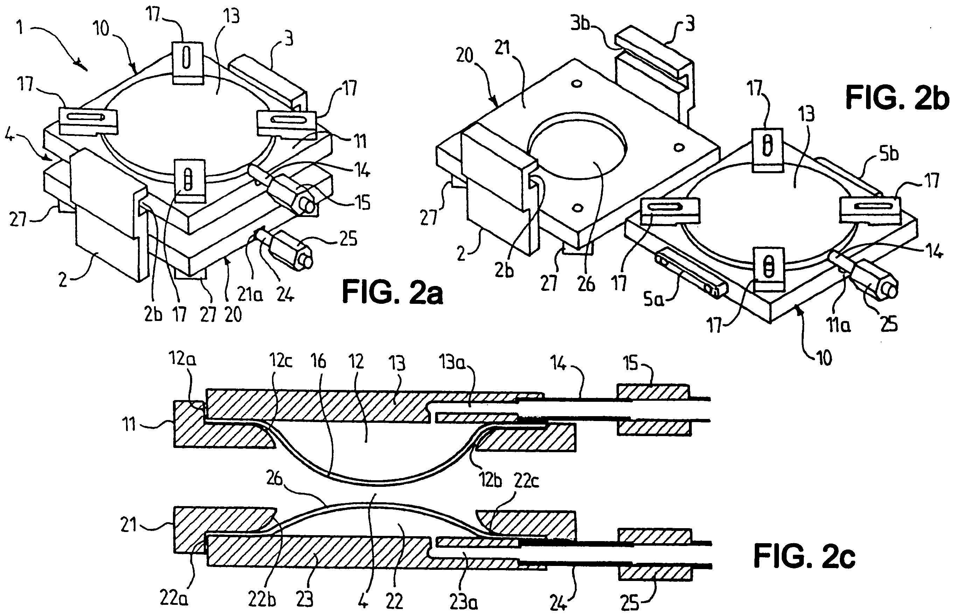

Conformément à la figure 2a, un système de pressage 1 à deux membranes gonflables comprend un premier et un second dispositifs, référencés respectivement 10 et 20. La figure 2b représente ces deux dispositifs dans une configuration décalée.

Les deux dispositifs 10 et 20 peuvent être assemblés l'un à l'autre avec un écart déterminé 4 (figure 2c) entre ceux-ci, au moyen de deux brides latérales 2 et 3. Les brides 2 et 3 peuvent être solidaires du dispositif 20 et munies de rainures 2b et 3b. Le dispositif 10 est alors muni de rails latéraux 5a et 5b, pour permettre d'assembler simplement les dispositifs 10 et 20 par déplacement des rails 5a et 5b dans les rainures 2b et 3b, en formant des glissières.

Dans le mode de mise en oeuvre de l'invention décrit maintenant, chaque dispositif 10 (resp. 20) comprend un corps principal 11 (resp. 21) muni d'une ouverture 12 (resp. 22). L'ouverture est un peu plus grande que la taille d'un verre ophtalmique. Une partie d'obturation 13 (resp. 23) peut être assemblée avec le corps principal 11 (resp. 21), en pinçant une membrane élastique 16 (resp. 26) entre la partie 13 (resp. 23) et le corps 11 (resp. 21), autour de l'ouverture de ce dernier. En outre, chaque partie d'obturation 13, 23 est pourvue de moyens d'admission gazeuse, pour introduire un gaz sous pression entre cette partie d'obturation et la membrane correspondante. Ces moyens d'admission comprennent une partie de canalisation interne 13a (resp. 23a) usinée dans la partie d'obturation 13 (resp. 23), une partie de canalisation externe 14 (resp. 24) et un système 15 (resp. 25) de connexion à une source de gaz pressurisé non représentée. Un évidement 11 a (resp. 21 a) est réalisé dans le corps principal 11 (resp. 21) pour laisser passer la partie de canalisation externe 14 (resp. 24). Chaque corps principal 11 (resp. 21) comporte un alésage droit 12a (resp. 22a) autour de l'ouverture 12 (resp. 22), qui est adapté pour maintenir la partie d'obturation 13 (resp. 23) dans une position centrée par rapport à l'ouverture. Il comporte aussi une partie de surface conique 12b (resp. 22b) pour guider une déformation de la membrane 16 (resp. 26) par l'ouverture. Une surface de raccordement courbe 12c (resp. 22c) relie l'alésage 12a (resp. 22a) à la partie de surface conique 12b (resp. 22b). Enfin, pour chaque dispositif 10 (resp. 20), la partie d'obturation 13 (resp. 23) est maintenue serrée contre le corps principal 11 (resp. 21), en pinçant de façon étanche la membrane 16 (resp. 26), par des étriers vissés 17 (resp. 27).

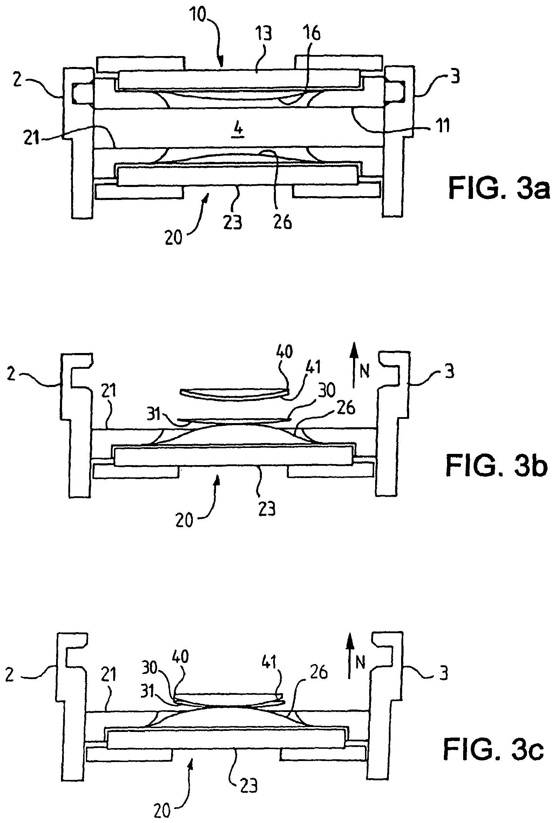

Les figures 2c et 3a montrent les deux dispositifs 10 et 20 en position d'assemblage, lorsque les membranes 16 et 26 sont chacune partiellement gonflées par une pression gazeuse.

L'étape de pressage de la structure en couches 30 contre le verre ophtalmique 40 est maintenant décrite, en référence aux figures 3b-3f.

Le dispositif 10 est retiré dans un premier temps, et le support 31 portant la structure en couches 30, est disposé sur la membrane 26 du dispositif 20. Le support 31 est orienté selon la direction N reportée sur les figures 3b et 3c, c'est-à-dire de sorte que le support 31 soit contre la membrane 26 et la couche 36 tournée vers le haut. Lorsque la structure 30 comporte une pellicule 37, celle-ci est pelée de façon à découvrir le matériau adhésif de la couche 36.

Le verre 40 est disposé à son tour sur la structure 30, avec sa face convexe 41 tournée vers la structure 30, conformément aux formes complémentaires du support 31 et de la face 41 du verre (figures 3b et 3c).

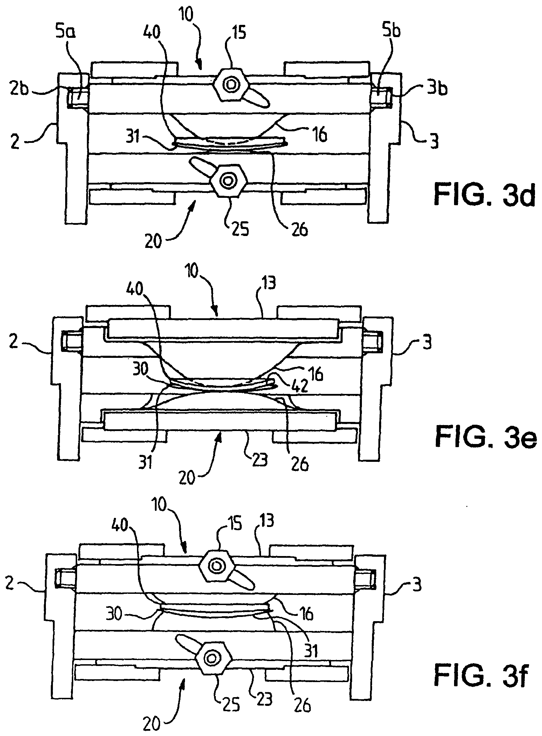

Le dispositif 10 est alors assemblé avec le dispositif 20, en engageant les rails 5a et 5b dans les rainures 2b et 3b. Les deux membranes 16 et 26 sont amenées de cette façon en vis-à-vis, selon la direction N, de part et d'autre du verre 40 et de la structure 30 portée par le support 31. Ensuite, un gaz est introduit sous pression dans la cavité située entre la partie d'obturation 13 et la membrane 16 du dispositif 10, jusqu'à ce que la membrane 16 vienne toucher en gonflant la face postérieure concave 42 du verre 40. La figure 3d illustre une telle configuration, et la figure 3e est une vue en section qui correspond à la figure 3d et fait apparaître clairement la membrane 16 gonflée.

Enfin, la pression gazeuse entre la partie 23 et la membrane 26 dans le dispositif 20 est amenée à une valeur égale à celle de la pression entre la partie 13 et la membrane 16 dans le dispositif 10, cette dernière pression étant maintenue sensiblement constante. Un tel mode opératoire permet d'éviter que des déplacements du verre 40 et du support 31 portant la structure 30 ne se produisent. La membrane 26 est ainsi gonflée contre le support 31 et la membrane 16 sert de surface d'appui du verre 40. La pression dans la membrane 26 est augmentée jusqu'à ce que celle-ci soit déformée de façon à être appliquée sur l'ensemble de la surface du support 31 (figure 3f). De cette façon, la pression de la membrane 26 est transmise à la couche 36 en chaque point de la surface 41 du verre. Une application régulière de la structure 30 sur le verre 40 est ainsi obtenue.

Eventuellement, le procédé peut comprendre en outre une irradiation UV de la couche 36, effectuée après l'étape de pressage de la structure 30 contre le verre 40, pour durcir la couche 36. En fonction de la composition chimique du matériau adhésif de la couche 36, cette irradiation peut provoquer une polymérisation de composés contenus dans celle-ci, de sorte que la couche 36 adhère définitivement à la couche 35 sur un côté, et au verre 40 de l'autre côté. Avantageusement, l'une au moins des parties d'obturation 13 et 23 ainsi que la membrane 16, 26 correspondante sont transparentes au rayonnement UV. L'irradiation peut alors être effectuée à travers l'un des dispositifs de pressage 10 ou 20, lorsque la structure 30 est encore maintenue fermement serrée contre le verre 40 par les membranes 16 et 26. Tout risque de déplacement de la structure 30 par rapport au verre 40 est ainsi évité.

Cette irradiation UV, ou bien une irradiation additionnelle spécifique, peut terminer la polymérisation de la couche 35, lorsque cette couche est sous-polymérisée jusqu'à ce niveau d'avancement du procédé.

La pression gazeuse à l'intérieur des dispositifs 10 et 20 est ensuite diminuée, et le verre 40 est récupéré. La structure 30 est alors collée sur la face 41 du verre, par l'intermédiaire de la couche 36.

Le support 31 est ensuite pelé. Lors de ce pelage, la structure 30 reste solidaire du verre 40. La surface découverte de la structure 30 peut alors être lavée, pour éliminer d'éventuels résidus de la couche 32.

La couche fonctionnelle 33 est alors située d'un côté des couches 34 ou 35 opposé au verre 40.

Les inventeurs ont constaté qu'un tel procédé n'engendre aucune réduction du contraste de polarisation de la couche 35, par rapport à la valeur initiale de ce même contraste mesurée avant que la structure 30 soit assemblée avec le verre 40. De cette façon, des verres fortement polarisants sont obtenus, qui ont un contraste de polarisation supérieur ou égal à 540, et qui présentent une qualité optique compatible avec l'utilisation ophtalmique.

Il est entendu que de nombreuses modifications peuvent être introduites dans la mise en oeuvre de l'invention qui a été décrite en détail, par exemple pour tenir compte d'une géométrie particulière de l'élément optique. En particulier, les modifications suivantes sont possibles, tout en conservant certains au moins des avantages de l'invention :
- la surface d'appui du dispositif 10 peut être formée par un coussinet élastique, situé à la place de la membrane gonflable 16 ;
- lorsque le support 31 et la structure 30 sont suffisamment souples et capables de se déformer plastiquement, le support 31 peut être plan lorsqu'il est introduit entre les dispositifs 10 et 20. Il se déforme alors en adoptant la forme de la face 41 du verre 40, lorsqu'il est pressé contre cette dernière par les deux membranes 16 et 26 ;
- la structure 30 peut être appliquée de la même façon sur la face concave 42 du verre 40, en retournant le verre 40 lors de son introduction entre les dispositifs de pressage 10 et 20 ; et
- la couche de matériau adhésif 36 peut être initialement portée par le verre 40, ou introduite entre les dispositifs 10 et 20 sous forme d'une portion de matériau adhésif indépendante, c'est-à-dire qui est séparée initialement de la structure 30 et du verre 40. Elle est placée entre ceux-ci puis est écrasée sous forme d'une couche régulière lorsque les deux membranes 16 et 26 sont gonflées.

## Revendications

1. Procédé de réalisation d'un élément optique polarisant par application d'une structure en couches (30) sur une surface d'un élément optique de base (40), le procédé comprenant les étapes suivantes :
/a/ réaliser la structure en couches (30) sur un support (31) ;
/b/ placer l'élément optique de base (40) et la structure en couches (30) portée par le support (31) entre un premier dispositif de pressage à surface d'appui (10) et un second dispositif de pressage à membrane gonflable (20), la structure en couches (30) étant tournée vers l'élément optique de base (40) et une portion d'un matériau adhésif étant disposée entre ladite structure et ledit élément de base ;
/c/ presser la structure en couches (30) contre la surface de l'élément optique de base (40) en gonflant la membrane du second dispositif (20) et en maintenant un écart fixe entre les premier et second dispositifs de pressage ; et
/d/ relâcher l'élément optique (40) et retirer le support (31) de façon à laisser la structure en couches (30) collée sur la surface dudit élément optique de base,
ledit procédé étant **caractérisé en ce que** la structure comprenant une première couche d'orientation (34) et une seconde couche polarisante comprenant des polymères à cristaux liquides et au moins un colorant dichroïque (35), ledit colorant dichroïque ayant une orientation angulaire déterminée par la première couche,
et **en ce que** ladite seconde couche polarisante (35) est sous-polymérisée pendant les étapes /b/ et /c/, et le procédé comprend une étape de polymérisation complémentaire de la seconde couche polarisante (35), effectuée après l'étape /c/.

2. Procédé selon la revendication 1, suivant lequel la première couche (34) comprend un réseau de polymères photo-orientés selon une direction déterminée, et suivant lequel la seconde couche (35) comprend une matrice de cristaux liquides monomériques, ladite matrice étant orientée par la première couche et fixant l'orientation des composés dichroïques.

3. Procédé selon la revendication 2, suivant lequel l'étape /a/ comprend les sous-étapes suivantes :
/a1/former une première couche comprenant des polymères photo-orientables (34) sur le support (31) ;
/a2/ polymériser la première couche (34) sous un rayonnement ultraviolet polarisé linéairement, de façon à réaliser un réseau de polymères photo-orientés selon une direction imposée par la direction de polarisation dudit rayonnement UV incident,
/a3/former, sur la première couche, une seconde couche (35) comprenant un mélange d'au moins un colorant dichroïque et d'au moins un cristal liquide monomérique réticulable, ceux-ci étant orientés angulairement par la première couche ; et
/a4/ polymériser au moins en partie les composés de cristal liquide de la seconde couche (35), de façon à fixer les composés dichroïques dans l'orientation angulaire déterminée par la première couche.

4. Procédé selon l'une quelconque des revendications précédentes, suivant lequel la structure en couches (30) comprend en outre au moins une troisième couche (33) sélectionnée parmi une couche de protection contre un rayonnement UV, une couche barrière à l'oxygène, une couche anti-abrasion, une couche anti-choc, un revêtement antireflet, un revêtement anti-statique et un revêtement antisalissure, ladite troisième couche étant située entre le support (31) d'une part, et lesdites première (34) et seconde (35) couches d'autre part.

5. Procédé selon l'une quelconque des revendications 1 à 4, suivant lequel la portion de matériau adhésif est initialement disposée sur la structure en couches (30), sous forme d'une couche (36) située d'un côté desdites première et seconde couches opposé au support (31).

6. Procédé selon la revendication 5, suivant lequel la couche de matériau adhésif (36) est déposée sur la structure en couches (30) par centrifugation.

7. Procédé selon l'une quelconque des revendications 1 à 4 suivant lequel la portion de matériau adhésif est initialement déposée sous forme d'une couche (36) sur l'élément optique (40) sur sa face destinée à recevoir la structure en couches (30).

8. Procédé selon la revendication 7, suivant lequel la couche de matériau adhésif (36) est déposée sur l'élément optique de base (40) par centrifugation.

9. Procédé selon l'une quelconque des revendications précédentes, comprenant en outre une irradiation de la portion de matériau adhésif effectuée après l'étape /c/, pour durcir ladite portion.

10. Procédé selon la revendication 9, suivant lequel l'irradiation de la portion de matériau adhésif est effectuée entre les étapes /c/ et /d/, à travers le premier (10) ou second (20) dispositif de pressage.

11. Procédé selon l'une quelconque des revendications précédentes, suivant lequel une couche de pelage (32) est disposée entre le support (31) et la structure en couches (30).

12. Procédé selon la revendication 11, suivant lequel la couche de pelage (32) comprend un composé tensioactif à base de silicone.

13. Procédé selon l'une quelconque des revendications précédentes, suivant lequel le support (31) présente une forme sensiblement complémentaire à la surface de l'élément optique de base (40), lorsque ledit support et ledit élément sont disposés pour l'étape /b/.

14. Procédé selon l'une quelconque des revendications précédentes, suivant lequel la surface de l'élément optique de base (40) est convexe.

15. Procédé selon l'une quelconque des revendications précédentes, suivant lequel l'élément optique de base (40) comprend un verre ophtalmique.

16. Procédé selon la revendication 15, suivant lequel le verre ophtalmique a un indice de réfraction supérieur ou égale à 1,60.

17. Procédé selon l'une quelconque des revendications précédentes, suivant lequel, à l'étape /b/, l'élément optique de base (40) est placé du côté dudit premier dispositif de pressage (10) et la structure en couches (30) est placée du côté dudit second dispositif de pressage (20).

18. Procédé selon l'une quelconque des revendications 1 à 17, suivant lequel le premier dispositif de pressage à surface d'appui (10) comprend un coussinet élastique formant ladite surface d'appui.

19. Procédé selon l'une quelconque des revendications 1 à 17, suivant lequel le premier dispositif de pressage à surface d'appui (10) comprend une autre membrane gonflable formant ladite surface d'appui, et suivant lequel l'étape /c/ est exécutée en gonflant les membranes des premier et second dispositifs de pressage.

## Patentansprüche

1. Verfahren zur Herstellung eines polarisierenden optischen Elements durch Aufbringen einer Schichtenstruktur (30) auf eine Oberfläche eines optischen Basiselements (40), wobei das Verfahren die folgenden Schritte umfasst:
/a/ Herstellen der Schichtenstruktur (30) auf einem Träger (31);
/b/ Platzieren des optischen Basiselements (40) und der von dem Träger (31) getragenen Schichtenstruktur (30) zwischen einer ersten Pressvorrichtung mit einer Auflagefläche (10) und einer zweiten Pressvorrichtung mit aufblasbarer Membran (20), wobei die Schichtenstruktur (30) dem optischen Basiselement (40) zugewandt ist und ein Anteil eines Klebematerials zwischen die Struktur und das Basiselement eingebracht wird;
/c/ Pressen der Schichtenstruktur (30) gegen die Oberfläche des optischen Basiselements (40), indem die Membran der zweiten Vorrichtung (20) aufgeblasen wird und ein fester Spalt zwischen der ersten und der zweiten Pressvorrichtung aufrechterhalten wird; und
/d/ Freigeben des optischen Elements (40) und Entfernen des Trägers (31), so dass die Schichtenstruktur (30) auf der Oberfläche des optischen Basiselements verklebt belassen wird,
wobei das Verfahren **dadurch gekennzeichnet ist, dass** die Struktur eine erste Ausrichtungsschicht (34) und eine zweite polarisierende Schicht umfassend, die Flüssigkristallpolymere und mindestens einen dichroitischen Farbstoff umfasst (35), wobei der dichroitische Farbstoff eine Winkelausrichtung besitzt, die von der ersten Schicht vorgegeben wird,
und dadurch, dass die zweite polarisierende Schicht (35) während der Schritte /b/ und /c/ unterpolymerisiert wird und das Verfahren einen Schritt der ergänzenden Polymerisation der zweiten polarisierenden Schicht (35) umfasst, der nach Schritt /c/ durchgeführt wird.

2. Verfahren nach Anspruch 1, gemäß dem die erste Schicht (34) ein in einer bestimmten Richtung photoorientiertes Netz von Polymeren umfasst und gemäß dem die zweite Schicht (35) eine Matrix aus monomeren Flüssigkristallen umfasst, wobei die Matrix durch die erste Schicht ausgerichtet ist und die Ausrichtung der dichroitischen Verbindungen fixiert.

3. Verfahren nach Anspruch 2, gemäß dem Schritt /a/ die folgenden Unterschritte umfasst:
/a1/ Bilden einer ersten Schicht, die photoorientierbare Polymere (34) umfasst, auf dem Träger (31);
/a2/ Polymerisieren der ersten Schicht (34) unter einer linear polarisierten Ultraviolettstrahlung, um ein Netz von in einer Richtung, die durch die Richtung der Polarisation der einfallenden UV-Strahlung vorgegeben wird, photoorientierten Polymeren herzustellen;
/a3/ Bilden, auf der ersten Schicht, einer zweiten Schicht (35), die ein Gemisch von mindestens einem dichroitischen Farbstoff und mindestens einem vernetzbaren monomeren Flüssigkristall umfasst, die durch die erste Schicht in einem Winkel ausgerichtet werden; und
/a4/ zumindest zum Teil Polymerisieren der Flüssigkristallverbindungen der zweiten Schicht (35), um die dichroitischen Verbindungen in der von der ersten Schicht vorgegebenen Winkelausrichtung zu fixieren.

4. Verfahren nach einem der vorhergehenden Ansprüche, gemäß dem die Schichtenstruktur (30) außerdem mindestens eine dritte Schicht (33) umfasst, die aus einer Schutzschicht gegen UV-Strahlung, einer Sauerstoffsperrschicht, einer abriebfesten Schicht, einer stoßfesten Schicht, einer antireflektierenden Beschichtung, einer antistatischen Beschichtung und einer schmutzabweisenden Beschichtung ausgewählt ist, wobei die dritte Schicht sich zwischen dem Träger (31) einerseits und der ersten (34) und zweiten (35) Schicht andererseits befindet.

5. Verfahren nach einem der Ansprüche 1 bis 4, gemäß dem der Klebematerialanteil zunächst auf der Schichtenstruktur (30) in Form einer Schicht (36) aufgebracht wird, die sich auf einer dem Träger (31) gegenüberliegenden Seite der ersten und zweiten Schicht befindet.

6. Verfahren nach Anspruch 5, gemäß dem die Klebematerialschicht (36) auf die Schichtenstruktur (30) durch Rotationsbeschichtung aufgebracht wird.

7. Verfahren nach einem der Ansprüche 1 bis 4, gemäß dem der Klebematerialanteil zunächst in Form einer Schicht (36) auf dem optischen Element (40) auf dessen Oberfläche, auf der die Schichtenstruktur (30) aufgebracht werden soll, aufgebracht wird.

8. Verfahren nach Anspruch 7, gemäß dem die Klebematerialschicht (36) auf dem optischen Basiselement (40) durch Rotationsbeschichtung aufgebracht wird.

9. Verfahren nach einem der vorhergehenden Ansprüche, das außerdem eine nach Schritt /c/ durchgeführte Bestrahlung des Klebematerialanteils zum Härten dieses Anteils umfasst.

10. Verfahren nach Anspruch 9, gemäß dem die Bestrahlung des Klebematerialanteils zwischen den Schritten /c/ und /d/ durch die erste (10) oder die zweite (20) Pressvorrichtung durchgeführt wird.

11. Verfahren nach einem der vorhergehenden Ansprüche, gemäß dem eine Ablöseschicht (32) zwischen dem Träger (31) und der Schichtenstruktur (30) aufgebracht wird.

12. Verfahren nach Anspruch 11, gemäß dem die Ablöseschicht (32) eine oberflächenaktive Verbindung auf Silikonbasis umfasst.

13. Verfahren nach einem der vorhergehenden Ansprüche, gemäß dem der Träger (31) eine Form aufweist, die im Wesentlichen komplementär zu der Oberfläche des optischen Basiselements (40) ist, wenn der Träger und das Element für Schritt /b/ positioniert werden.

14. Verfahren nach einem der vorhergehenden Ansprüche, gemäß dem die Oberfläche des optischen Basiselements (40) konvex ist.

15. Verfahren nach einem der vorhergehenden Ansprüche, gemäß dem das optische Basiselement (40) ein ophthalmisches Glas umfasst.

16. Verfahren nach Anspruch 15, gemäß dem das ophthalmische Glas einen Brechungsindex von mehr als oder gleich 1,60 hat.

17. Verfahren nach einem der vorhergehenden Ansprüche, gemäß dem im Schritt /b/ das optische Basiselement (40) auf der Seite der ersten Pressvorrichtung (10) angeordnet wird und die Schichtenstruktur (30) auf der Seite der zweiten Pressvorrichtung (20) angeordnet wird.

18. Verfahren nach einem der Ansprüche 1 bis 17, gemäß dem die erste Pressvorrichtung mit einer Auflagefläche (10) eine elastische Lagerbuchse enthält, die die Auflagefläche bildet.

19. Verfahren nach einem der Ansprüche 1 bis 17, gemäß dem die erste Pressvorrichtung mit einer Auflagefläche (10) eine weitere aufblasbare Membran umfasst, die die Auflagefläche bildet, und gemäß dem Schritt /c/ durch Aufblasen der Membranen der ersten und der zweiten Pressvorrichtung durchgeführt wird.

## Claims

1. Method of producing a polarizing optical element by applying a multilayer structure (30) to one surface of a base optical element (40), the method comprising the following steps:
a) producing the multilayer structure (30) on a support (31);
b) placing the base optical element (40) and the multilayer structure (30) carried by the support (31) between a first pressing device (10) having a bearing surface and a second pressing device (20) having an inflatable membrane, the multilayer structure (30) being turned towards the base optical element (40) and a portion of an adhesive being placed between said structure and said base element;
c) pressing the multilayer structure (30) against the surface of the base optical element (40) by inflating the membrane of the second device (20) and keeping a fixed distance between the first and second pressing devices; and
d) releasing the optical element (40) and withdrawing the support (31) so as to leave the multilayer structure (30) bonded to the surface of said base optical element,
said method being **characterized in that** the structure comprising an orienting first layer (34) and a polarizing second layer comprising liquid-crystal polymers and at least one dichroic dye (35), said dichroic dye having an angular orientation determined by the first layer, and **in that in that** said polarizing second layer (35) is undercured during steps b) and c) and the method includes a step of supplementarily curing the polarizing second layer (35), carried out after step c).

2. Method according to Claim 1, in which the first layer (34) comprises a network of polymers photooriented along a defined direction and in which the second layer (35) comprises a matrix of monomeric liquid crystals, said matrix being oriented by the first layer and fixing the orientation of the dichroic compounds.

3. Method according to Claim 2, in which step a) comprises the following substeps:
a1) forming a first layer (34) comprising photoorientable polymers on the support (31);
a2) curing the first layer (34) by linearly polarized ultraviolet radiation so as to produce a network of polymers photooriented along a direction imposed by the direction of polarization of said incident UV radiation;
a3) forming a second layer (35), comprising a mixture of at least one dichroic dye and at least one crosslinkable monomeric liquid crystal, on the first layer, said dye and said liquid crystal both being angularly oriented by the first layer; and
a4) at least partly curing the liquid-crystal compounds of the second layer (35) so as to fix the dichroic compounds in the angular orientation determined by the first layer.

4. Method according to any one of the preceding claims, in which the multilayer structure (30) further includes at least a third layer (33) selected from a UV radiation protection layer, an oxygen barrier layer, an abrasion-resistant layer, an impact-resistant layer, an antireflection coating, an antistatic coating and an antisoiling coating, said third layer lying between the support (31) on the one hand and said first (34) and second (35) layers on the other.

5. Method according to any one of Claims 1 to 4, in which the portion of adhesive is initially placed on the multilayer structure (30) in the form of a layer (36) lying on the opposite side of said first and second layers from the support (31).

6. Method according to Claim 5, in which the adhesive layer (36) is deposited on the multilayer structure (30) by spin coating.

7. Method according to any one of Claims 1 to 4, in which the portion of adhesive is initially deposited in the form of a layer (36) on the optical element (40) on its face intended to receive the multilayer structure (30) .

8. Method according to Claim 7, in which the adhesive layer (36) is deposited on the base optical element (40) by spin coating.

9. Method according to any one of the preceding claims, which further includes irradiation of the adhesive portion, carried out after step c), in order to cure said portion.

10. Method according to Claim 9, in which the irradiation of the adhesive portion is carried out between steps c) and d), through the first (10) or second (20) pressing device.

11. Method according to any one of the preceding claims, in which a peel layer (32) is placed between the support (31) and the multilayer structure (30).

12. Method according to Claim 11, in which the peel layer (32) comprises a silicon-based surfactant compound.

13. Method according to any one of the preceding claims, in which the support (31) has a shape substantially complementary to the surface of the base optical element (40), when said support and said element are positioned for step b).

14. Method according to any one of the preceding claims, in which the surface of the base optical element (40) is convex.

15. Method according to any one of the preceding claims, in which the base optical element (40) comprises an ophthalmic lens.

16. Method according to Claim 15, in which the ophthalmic lens has a refractive index of 1.60 or higher.

17. Method according to any one of the preceding claims, in which, in step b), the base optical element (40) is placed on the side facing said first pressing device (10) and the multilayer structure (30) is placed on the side facing said second pressing device (20).

18. Method according to any one of Claims 1 to 17, in which the first pressing device (10), having a bearing surface, includes a resilient bearing element that forms said bearing surface.

19. Method according to any one of Claims 1 to 17, in which the first pressing device (10) having a bearing surface includes another inflatable membrane, that forms said bearing surface, and in which step c) is carried out by inflating the membranes of the first and second pressing devices.
